# EUROPEAN PATENT APPLICATION

(11) **EP 4 732 978 A1**
(43) Date of publication of application: **29.04.2026**
(21) Application number: 25153859.1
(22) Date of filing: 24.01.2025
(51) Int. Cl.: B23D 63/16, B23D 63/12

(54) **SAW CHAIN GRINDING MACHINE**

(30) Priority: 24.10.2024 SE 2451054
(71) Applicant: Indusol AB, 146 33 Tullinge (SE)
(72) Inventor: HANSSON, Anders, Huddinge (SE); ENGSTRÖM, Lars, Stockholm (SE)
(74) Representative: Bjerkén Hynell KB

(57) **Abstract**

A saw chain grinding machine (2), for grinding a saw chain (4) provided with left-hand and right-hand cutting links (6), the machine (2) comprises a feeding arrangement (8) structured to feed the saw chain (4) in a forward direction along guiding members (28, 30) such that a longitudinal axis of said saw chain (4) is essentially horizontally oriented during grinding. The machine (2) comprises a first grinding station (10) provided with a first grinding disc (12) rotatable about a first spindle (14) and configured to grind one of said left-hand and right-hand cutting links (6), and a second grinding station (16) provided with a second grinding disc (18) rotatable about a second spindle (20) and configured to grind the other of said left-hand and right-hand cutting links (6), said grinding stations (10, 16) are arranged at a distance from each other along the saw chain (4), and that said spindles (14, 20), provided with said grinding discs (12, 18), are arranged above a saw chain (4) arranged at said guiding members (28, 30). The machine (2) comprises a control unit (22) that is configured to control said grinding stations (10, 16) to perform simultaneous grindings of left-hand and right-hand cutting links (6) of said saw chain (4) by applying a predefined grinding cycle.

## Description

### Technical field

The present disclosure relates to a saw chain grinding machine particularly configured for high-capacity and automatic grinding of saw chains.

### Background

Chain saws are currently used in many various applications, e.g. to fell trees and trim branches, and to reduce the trees and branches to logs of manageable size. Chain saws are sometimes also used to process logs in to lumber. Chain saws include an engine or motor enclosed within a housing, and a thin bar extending outwardly from the housing upon which an endless chain moves. Chain saws may be powered by combustion engines or electric motors, and are employed in situations where the depth of cut is more than a few centimeters, and a wide kerf is desirable or acceptable. Commercial applications generally require more heavy-duty chain saws with longer and wider bars and correspondingly longer and wider chains, while consumer applications typically have shorter and thinner bars and chains.

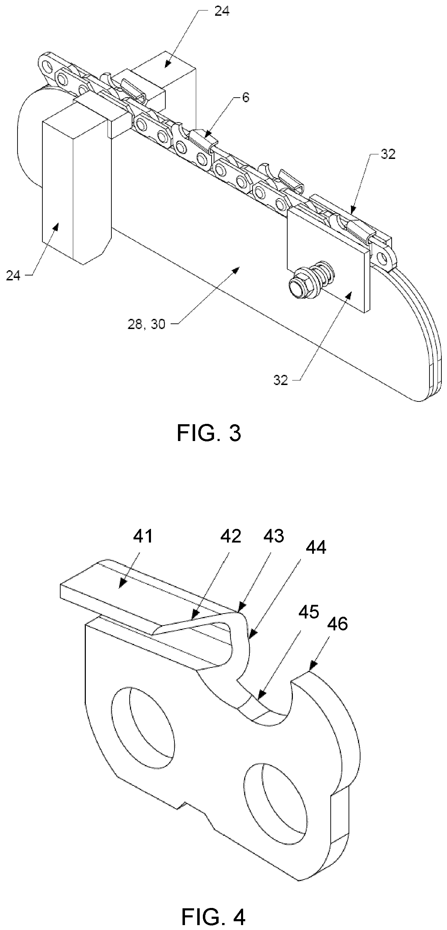

Through use, the cutting edges of the various teeth along the chain become dulled and worn. This requires additional pressure on the chain saw to effectuate the desired cut, can generate excessive and dangerous heat, and generally makes it difficult to cut through the wood. It is thus necessary to periodically sharpen the cutting edges of the teeth to maintain efficiency in the cutting operation. The saw chain conventionally comprises a series of right-hand cutting links and left-hand cutting links, alternatively positioned along the chain. The cutting portion of each link includes a cutting tooth typically with a first edge perpendicular to the saw kerf and a second edge parallel to the saw kerf. One such cutting link is shown in figure 4, and will be further described below. An upstanding portion, typically referred to as a depth gauge, projects upwardly in front of the cutting edges on each link. The cutting edge is typically ground at a predetermined rake angle, typically 32 degrees, with respect to a line drawn perpendicular to the length of the cutting link. Detailed illustrations and descriptions of cutting links for conventional chain saws are found for example in US5156071 and US4463499.

The unique shape of the cutting teeth on a chain saw and their location on separate links in a chain requires special sharpening tools in order to accurately and quickly sharpen the cutting links.

Some prior art documents will be identified and briefly discussed in the following. WO2007050006 relates to a grinding wheel arranged for simultaneous grinding of a cutting link's cutting tooth and the associated depth limiter in a cutting chain.

SE541057 relates to a chain pusher intended for a saw chain in a saw chain grinding device. The chain pusher is designed to be able to push the saw chain in a first direction to a position for grinding a saw tooth, and the chain pusher is designed to follow the upper edge of the saw chain when moving opposite the first direction.

WO2010140948A1 discloses a device for automatic grinding of a saw chain that comprises chain guides, means for feeding the saw chain forward along the chain guides, means for fixing the saw chain relative to the chain guides, and means for supporting a rotatable grinding disc which is switchable between two positions for grinding of right links and left links of the saw chain.

US5117713 relates to an arrangement in automatic saw chain grinders which includes a mechanism for feeding the cutter links of a saw chain to be ground to a grinding location. A movable grinding machine for grinding the cutting edge of cutter link is also provided. WO9014915A1 discloses a saw chain grinding machine for grinding endless saw chains with left-hand and right-hand saw teeth comprises a feeding wheel adapted to take up a saw chain for feeding the teeth thereof to a grinding position, and a grinding wheel which, in the grinding position is engageable with a saw tooth for grinding the cutting edge thereof.

Although saw grinding machines are known that are provided with automated procedural steps, there are still needs for improvements both regarding automation, but also regarding grinding capacity, and grinding quality.

Thus, an object of the present invention is to achieve an improved saw chain grinding machine, having higher grinding capacity and quality, and that requires less or no manual intervention during a grinding procedure, than presently applied devices.

### Summary

The above-mentioned objects are achieved by the present invention according to the independent claim.

Preferred embodiments are set forth in the dependent claims.

The present invention relates to an automatic saw chain grinding machine comprising two grinding stations, each provided with a grinding disc. These grinding discs are arranged with predefined angles in relation to the movement direction of the saw chain. The reason for employing two grinding discs is that the cutting edges of both left-hand cutting links and right-hand cutting links are to be ground during the same grinding cycle.

In one embodiment, a sensor member is provided in relation to each of the grinding discs, and each sensor member is configured to determine the orientation of a cutting link to be ground, i.e. if it is left- or right-handed. The sensor member is preferably a mechanical electrical sensor, one at each side of the saw chain.

In one embodiment, the grinding disc is a grinding disc of a so-called CBN-type, where CBN stands for Cubic Boron Nitride.

This type of disc requires and benefits from a high rotational speed. This in turn will put high demands on the disc attachment arrangement to very precisely and firmly fixate the disc during the high rotation speed in order to avoid vibrations and obtain an accurately ground cutting edge.

Thus, the grinding spindles are designed to work at a very high rotational speed providing a peripheral speed being higher than 50 m/s, and wherein each grinding spindle is provided with a double centering clamping nut structured to center both the grinding disc and the nut itself on a grinding spindle shaft when the nut is tightened.

The edge of the grinding disc is preferably provided with a curved grinding surface adapted to the shape of the tooth edge of the cutting edge of the saw chain to be ground.

The grinding machine comprises two grinding discs that are able to simultaneously grind both left- and right-hand cutting links which improves productivity compared to machines with one grinding disc that needs to be turned and change rotational direction between left and right tooth grinding.

Two different grinding stations are provided, such that individual feeding units are provided, with a slack of the saw chain in between the grinding stations that permits correct feeding even if the chain is worn and elongated. In one embodiment, friction plates are provided at each feeding unit, that ensure correct feeding. This is a more precise solution to introduce friction in the system compared to solutions that put a weight or pneumatic pressure to the chain to increase friction between chain and guide.

### Brief description of the drawings

Figure 1 is a schematic illustration showing embodiments of saw chain grinding machine according to the present invention.
Figure 2 is a schematic illustration from above of the saw chain grinding machine according to the present invention.
Figure 3 is a perspective view of a feeding unit according to one embodiment of the present invention.
Figure 4 is a perspective view of a cutting link of a saw chain.
Figure 5 is a perspective view that illustrates the nut holding the disc according to an embodiment of the present invention.

### Detailed description

The saw chain grinding machine will now be described in detail with references to the appended figures. Throughout the figures the same, or similar, items have the same reference signs. Moreover, the items and the figures are not necessarily to scale, emphasis instead being placed upon illustrating the principles of the invention.

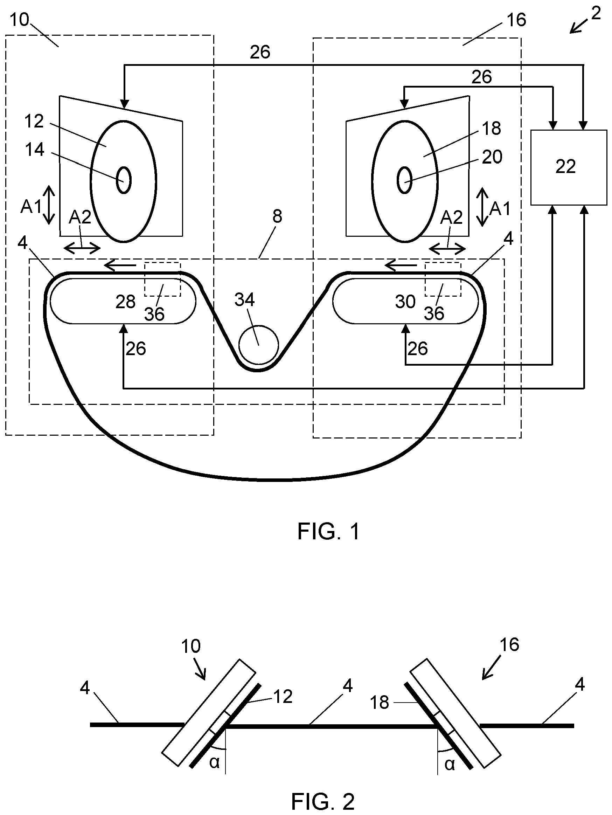

Referring to the figures, especially to figures 1 and 2, a saw chain grinding machine 2, for grinding a saw chain 4 provided with left-hand and right-hand cutting links 6 (see figures 3 and 4) will be described in detail.

The machine 2 comprises a feeding arrangement 8 structured to feed the saw chain 4 in a forward direction along guiding members such that a longitudinal axis of said saw chain 4 is essentially horizontally oriented during grinding. In the schematic illustration shown in figure 1, the feeding direction of the upper part of the saw chain is to the left which is indicated by arrows.

The machine 2 comprises a first grinding station 10 provided with a first grinding disc 12 rotatable about a first spindle 14 and configured to grind one of the left-hand and right-hand cutting links 6, and a second grinding station 16 provided with a second grinding disc 18 rotatable about a second spindle 20 and configured to grind the other of the left-hand and right-hand cutting links 6.

The grinding stations 10, 16 are arranged at a distance from each other along the saw chain 4, and that said spindles 14, 20, provided with the grinding discs 12, 18, are arranged above a saw chain 4 arranged at the guiding members.

The machine 2 comprises a control unit 22 that is configured to control the grinding stations 10, 16 to perform simultaneous grindings of left-hand and right-hand cutting links 6 of the saw chain 4 by applying a predefined grinding cycle.

Each grinding disc station is provided with a guiding member, preferably being a guide rail to guide the chain, which e.g. is made from steel or from other materials having similar capabilities. Since both the chain and guide rail have smooth surfaces, the friction between the chain and the guide rail is very low. To straighten the chain and be able to position the links in the correct position as well as eliminating the risk of the chain sliding out of position, the guide rail is preferably provided with spring loaded friction plates that acts on the sides of the chain, which will be further described below.

The two grinding discs are controlled by the control unit to always perform the same programmed movement upon grinding. Preferably, this is achieved by mounting the two grinding stations at a common mounting bracket (not shown in the figures), thereby ensuring the same movement upon grinding for the two grinding discs will be provided.

Since the chain is elongated over time when it is used, it has to be fed forward by individual feeders, a first and a second feeding unit which will be further described below, i.e. one feeding unit for each grinding disc station. Between the grinding disc stations there is a slack in the chain. As will be discussed below, and shown in figure 1, this may be embodied by a slack indicator unit 34 positioned to define a minimum slack. More particularly, the slack absorbs the eventual elongation of the chain thus allowing the two feeders to work directly on their respective tooth to be ground without the risk of one feeder disturbing the other. This would be the case if the chain was to run straight between the two grinding stations.

According to an embodiment, the grinding stations 10, 16 are arranged such that each grinding disc 12, 18 is arranged at a predetermined angle α in relation to the cutting link 6 to be ground (see figure 2), and that the predetermined angle α corresponds to a rake angle, typically 32 degrees (or other angles, preferably in the range of 28-40 degrees), of a forward edge of a cutting edge, with respect to a line drawn perpendicular to the length axis of the cutting link 6. The length axis of a cutting link 6 coincides with the length axis of the saw chain 4.

According to a further embodiment, each grinding station 10, 16 comprises chain fixating members 24 structured to fixate a cutting link 6 in a grinding position, and to hold said cutting link 6 in that position during grinding of that cutting link. See specifically figure 3.

According to another embodiment, each grinding station 10, 16 is structured to perform translational movements of the grinding disc 12, 18 along two movement axes, upon receipt of control signals 26 from said control unit 22, a first movement axis A1 being a vertical direction perpendicular to a length axis of the cutting link 6, such that the grinding disc 12, 18 is movable to and from the saw chain 4 from above, and a second movement axis A2 being a horizontal direction parallel to the length axis of the cutting link 6.

According to still another embodiment, the feeding arrangement 8 comprises the guiding members that in turn comprises a first feeding unit 28 and a second feeding unit 30 arranged to feed and guide the saw chain 4 during a grinding procedure in a fully automatic sequential process. The first grinding station 10 is arranged in relation to the first feeding unit 28, more particularly above the first feeding unit, and the second grinding station 16 is arranged in relation to the second feeding unit 30, more particularly above the second feeding unit.

Preferably, the first and second feeding units 28, 30 are provided with friction plates 32 acting on the sides of the saw chain 4. The friction plates 32 may be spring loaded, or loaded by other means, and being structured to provide tension to the saw chain 4, and to fixate the saw chain, and particularly the cutting link 6, during feeding and/or grinding. See figure 3 that shows a perspective view of the first feeding unit 28.

As mentioned above, and according to another embodiment, the feeding arrangement 8 comprises a slack indicator unit 34, which is schematically shown in figure 1, arranged between said grinding stations 10, 16, and positioned to define a minimum slack of the saw chain between the grinding stations. The slack indicator unit 34 will guide the operator when mounting the saw chain in the machine such that the saw chain is mounted to run below the slack indicator unit 34. The slack indicator unit 34 is positioned to indicate the minimum slack when the saw chain is in contact with the unit 34. During operation the saw chain should not be in contact with the slack indicator unit 34. Preferably, the slack indicator unit comprises a contact sensor member configured to generate an indication signal if the saw chain contacts the slack indicator unit 34. This may e.g. result in that the machine is stopped automatically or manually. The slack indicator unit 34 may be a wheel having an even surface made of e.g. rubber, or it may be a rod or a pin.

According to still another embodiment, each grinding station 10, 16 comprises a sensor member 36 configured to work on a side of the teeth of the cutting links 6, thereby identifying a tooth to feed to a grinding position during a feeding cycle. The sensor members are configured to generate sensor signals which are applied to the control unit 22, and to receive control signals from the control unit. In figure 1, these sensor signals and control signals are included in the control signals 26.

Preferably, the feeding cycle starts with that the sensor member 36 is controlled to back along the chain until a tooth is identified, then a feeder finger engages the tooth and moves it forward to a grinding position.

The sensor member 36 is configured to identify each tooth as either a left or a right tooth of a cutting link 6, and that each left tooth is ground in one of the grinding stations 10, 16, and that each right tooth is ground in the other of the grinding stations 10, 16.

According to a further embodiment, the first and second grinding discs 12, 18 are made from steel, or from other materials having the same or similar properties as steel, and are provided with a high abrasive grinding material, e.g. Cubic Boron Nitride, CBN, on the grinding surfaces of the discs.

The grinding disc, e.g. made from steel, having a predetermined profiled edge, preferably being plated by a layer of CBN-grains (powder).

CBN belongs to the group of grinding materials denoted "super-abrasives". They have nearly the same hardness as diamond, but much more resistant to heat and thus suitable for grinding steel. CBN is a highly durable synthetic abrasive mineral, second only to diamond in hardness. This durability makes it ideal for grinding hardened steel and superalloys.

Grinding with CBN grinding discs requires and benefits from a high rotational speed. A conventional ceramic (aluminium oxide, silicon carbide, etc.) grinding disc has a peripheral speed of approximately 25-50 m/s, but for a CBN grinding disc it is beneficial to have much higher speeds, at least being higher than 50 m/s.

The high rotational speed requires high demand on balancing and centring of the disc. If vibrations occur, that will negatively impact the grinding result. In addition, vibrations will result in wear of the grinding spindle, and the grinding disc.

In one embodiment, a double centring clamping nut is provided that allows for very high rotational speed without vibration problems.

The profile that is machined into the steel body of the grinding disc is compensated for the layer of CBN that is plated with nickel.

The final profile that is provided after the coating is in place is adapted to get the correct grinding profile in the chain's saw tooth. Thereby will be achieved the cutting angles that the customer wants on the saw teeth. In one variation, the edge of the grinding disc may be profiled to provide a curved edge on the chainsaw tooth edge.

As discussed above, when using CBN abrasive grinding material, it is necessary to rotate the grinding discs at a very high rotational speed. For this to work without vibration problems, the grinding discs and their fixation to the spindles need to be extremely well-balanced and mounted concentrically on the spindle shafts. Thus, the grinding spindles 14, 20 are structured to work at a very high rotational speed providing a peripheral speed being higher than 50 m/s, and wherein each grinding spindle 14, 20 is provided with a clamping nut structured to center the grinding disc 12, 18 on a grinding spindle shaft when the nut is tightened.

According to an embodiment, each grinding spindle 14, 20 is provided with a double centering clamping nut structured to center both the grinding disc 12, 18 and the nut itself on a grinding spindle shaft when the nut is tightened.

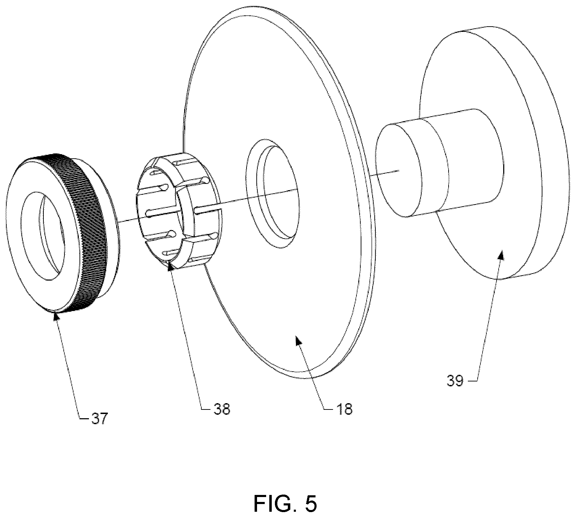

The grinding spindle provided with the double centering clamping nut is illustrated in figure 5.

The nut comprises two parts, an outer ring 37 and an inner ring 38. The inner ring 38, often called a collet, is provided with a taper in both ends and cut-outs around its periphery, enabling the inner ring 38 to contract and centre itself on the grinding spindle shaft member 39 when axial pressure is applied to the taper in both ends. The outer ring 37 is provided with threads of the same dimension as the grinding spindle shaft and an internal taper designed to match the taper of one end of ring 38. The grinding disc 18 is also provided with an internal taper designed to match the taper of the other end of ring 38. Thus, when the grinding disc 18, inner ring 38 and outer ring 37 are mounted on the grinding spindle shaft member and the outer ring 37 is tightened on its threads, the inner ring 38 centres itself, the grinding disc 18 and outer ring 37 while at the same time providing axial pressure on the grinding disc 18 against the flange of the grinding spindle shaft member 39.

The control unit 22 is provided with input means, e.g. a touch screen, where the operator may input a grinding procedure, e.g. by choosing a grinding procedure from a list. The control unit comprises a storage means to store various grinding procedures, or the control unit may be instructed to download various grinding procedures from the net.

In one embodiment, the control unit is provided with control instructions in a grinding procedure to control the grinding stations 10, 16 to perform a grinding cycle of a grinding procedure, provided that the cutting links to be ground are securely fixated (clamped) in their grinding positions, including to:
- move the grinding discs 12, 18 from their start positions, downwards to a position for grinding a depth gauge of a cutting link 6 to a desired height to match a predetermined tooth height;
- move the grinding discs 12, 18 horizontally of the depth gauge while grinding;
- move the grinding discs 12, 18 to predefined positions for grinding teeth of a cutting link 6,
- move the grinding discs 12, 18 sideways and down in a synchronized movement for grinding the teeth, and
- when the teeth are ground, move the grinding discs 12, 18 horizontally to a position where it is clear to move the grinding discs 12, 18 up, and then moving the grinding discs 12, 18 up to the start positions.

During the entire grinding process, a high pressure coolant is applied to the teeth subjected to grinding.

As described above, a grinding cycle includes a two-axis movement of each grinding disc. The grinding disc initially moves down to grind the depth gauge to the desired height to match the new tooth height. The grinding disc moves horizontally over the depth gauge while grinding. When the depth gauge is ground, the grinding disc moves further down to the correct position for grinding the tooth. The grinding wheel moves sideways and down in a synchronized movement to grind the tooth to the requested point/set geometry. When the tooth is ground the disc reverses before moving up to a start position.

The chain to be ground is placed in the machine and the doors are closed. A feasible grinding procedure is selected on a display screen by an operator.

The machine starts up and positions the chain for the grinding operation. Two teeth are typically ground at the same time, one left and one right cutting edge to increase productivity. The chain is fed through the machine in a fully automatic sequential process. With references to figure 4, the different parts of a cutting link are indicated.
41. Tooth top plate
42. Tooth top edge
43. Tooth cutting corner
44. Tooth side edge
45. Gullet
46. Raker / Depth gauge

The cutting links of a saw chain has two major parts, the Tooth that cuts the material and the Raker/Depth Gauge that rakes out the swarf out of the cut and determines how deep the tooth will cut in each pass through the wood. The tooth top plate 41 slants downward at a certain slope. This means that when the tooth is ground, the grinding disc must move along the same slope in order to grind both the tooth top edge and the tooth side edge 44 correctly. For each regrinding of the tooth, the height of the tooth will since be lower. For a proper cutting performance, it is important to always maintain a certain height difference between the tooth top plate and the tip of the Raker/depth Gauge.

During cutting, the swarf collects in the Gullet 45 and is disposed when the cutting link moves out of the material.

The present invention is not limited to the above-described preferred embodiments. Various alternatives, and modifications may be used. Therefore, the above embodiments should not be taken as limiting the scope of the invention, which is defined by the appending claims.

### List of references

- 2.: Chain grinding machine
- 4.: Saw chain
- 6.: Cutting links
- 8.: Feeding arrangement
- 10.: First grinding station
- 12.: First grinding disc
- 14.: First spindle
- 16.: Second grinding station
- 18.: Second grinding disc
- 20.: Second spindle
- 22.: Control unit
- 24.: Chain fixating member
- 26.: Control signals
- 28.: First feeding unit
- 30.: Second feeding unit
- 32.: Friction plate
- 34.: Slack indicator unit
- 36.: Sensor member
- 37.: Outer ring
- 38.: Inner ring
- 39.: Grinding spindle shaft member
- 41.: Tooth top plate
- 42.: Tooth top edge
- 43.: Tooth cutting corner
- 44.: Tooth side edge
- 45.: Gullet
- 46.: Raker / Depth gauge

## Claims

1. A saw chain grinding machine (2), for grinding a saw chain (4) provided with left-hand and right-hand cutting links (6), the machine (2) comprises a feeding arrangement (8) structured to feed the saw chain (4) in a forward direction along guiding members (28, 30) such that a longitudinal axis of said saw chain (4) is essentially horizontally oriented during grinding, **characterized in that** the machine (2) comprises a first grinding station (10) provided with a first grinding disc (12) rotatable about a first spindle (14) and configured to grind one of said left-hand and right-hand cutting links (6), and a second grinding station (16) provided with a second grinding disc (18) rotatable about a second spindle (20) and configured to grind the other of said left-hand and right-hand cutting links (6), said grinding stations (10, 16) are arranged at a distance from each other along the saw chain (4), and that said spindles (14, 20), provided with said grinding discs (12, 18), are arranged above a saw chain (4) arranged at said guiding members (28, 30), and that said machine (2) comprises a control unit (22) that is configured to control said grinding stations (10, 16) to perform simultaneous grindings of left-hand and right-hand cutting links (6) of said saw chain (4) by applying a predefined grinding cycle.

2. The saw chain grinding machine (2) according to claim 1, wherein the grinding stations (10, 16) are arranged such that each grinding disc (12, 18) is arranged at a predetermined angle in relation to the cutting link (6) to be ground, and that said predetermined angle corresponds to a rake angle, typically 32 degrees, of a forward edge of a cutting edge, with respect to a line drawn perpendicular to the length of the cutting link (6).

3. The saw chain grinding machine (2) according to claim 1 or 2, wherein each grinding station (10, 16) comprises chain fixating members (24) structured to fixate a cutting link (6) in a grinding position, and to hold said cutting link (6) in that position during grinding of that cutting link.

4. The saw chain grinding machine (2) according to any of claims 1-3, wherein each grinding station (10, 16) is structured to perform translational movements of the grinding disc (12, 18) along two movement axes, upon receipt of control signals (26) from said control unit (22), a first movement axis A1 being a vertical direction perpendicular to a length axis of the cutting link (6), such that the grinding disc (12, 18) is movable to and from the saw chain (4) from above, and a second movement axis A2 being a horizontal direction parallel to the length axis of the cutting link (6).

5. The saw chain grinding machine (2) according to any of claims 1-4, wherein said feeding arrangement (8) comprises said guiding members which comprises a first feeding unit (28) and a second feeding unit (30) arranged to feed and guide said saw chain (4) during a grinding procedure in a fully automatic sequential process, said first grinding station (10) is arranged in relation to said first feeding unit (28), and said second grinding station (16) is arranged in relation to said second feeding unit (30).

6. The saw chain grinding machine (2) according to claim 5, wherein said first and second feeding units (28, 30) are provided with friction plates (32) acting on the sides of the saw chain (4), and wherein said friction plates (32) being structured to provide tension to said saw chain (4) during feeding and/or grinding.

7. The saw chain grinding machine (2) according to any of claims 1-6, wherein said feeding arrangement (8) comprises a slack indicator unit (34) arranged between said grinding stations (10, 16), and positioned to indicate a minimum slack of said saw chain (4) when the chain is mounted in the machine.

8. The saw chain grinding machine (2) according to any of claims 1-7, wherein each grinding station (10, 16) comprises a sensor member (36) configured to work on a side of the teeth of the cutting links (6), thereby identifying a tooth to feed to a grinding position during a feeding cycle.

9. The saw chain grinding machine (2) according to claim 8, wherein the feeding cycle starts with that the sensor member (36) is controlled to back along the chain until a tooth is identified, then a feeder finger engages the tooth and moves it forward to a grinding position.

10. The saw chain grinding machine (2) according to claim 8 or 9, wherein said sensor member (36) is configured to identify each tooth as either a left or a right tooth of a cutting link (4), and that each left tooth is ground in one of the grinding stations (10, 16), and that each right tooth is ground in the other of the grinding stations (10, 16).

11. The saw chain grinding machine (2) according to any of claims 1-10, wherein said first and second grinding discs (12, 18) are made from steel, or from any material having the same or similar properties as steel, and are provided with a super abrasive grinding material, e.g. Cubic Boron Nitride, CBN.

12. The saw chain grinding machine (2) according to any of claims 1-11, wherein said grinding spindles (14, 20) are structured to work at a very high rotational speed providing a peripheral speed being higher than 50 m/s, preferably higher than 90 m/s, and wherein each grinding spindle (14, 20) is provided with a clamping nut structured to center both the grinding disc (12, 18) and the nut itself on a grinding spindle shaft when the nut is tightened.

13. The saw chain grinding machine (2) according to claim 12, wherein said clamping nut is a double centering clamping nut comprising an outer ring (37) and an inner ring (38) provided with a taper in both ends and cut-outs around its periphery, enabling the inner ring 38 (collet) to contract and centre itself on a grinding spindle shaft member (39) when axial pressure is applied to the taper in both ends, the outer ring (37) is provided with threads of the same dimension as the grinding spindle shaft and an internal taper designed to match the taper of one end of ring (38), and the grinding disc (12, 18) is provided with an internal taper designed to match the taper of the other end of ring 38.

14. The saw chain grinding machine(2) according to any of claims 1-13, wherein the grinding cycle comprises controlling the grinding stations (10, 16) to:
- move the grinding discs (12, 18) from their start positions, downwards to a position for grinding a depth gauge of a cutting link (6) to a desired height to match a predetermined tooth height;
- move the grinding discs (12, 18) horizontally of the depth gauge while grinding;
- move the grinding discs (12, 18) to predefined positions for grinding teeth of a cutting link (6),
- move the grinding discs (12, 18) sideways and down in a synchronized movement for grinding the teeth, and
- when the teeth are ground, move the grinding discs (12, 18) horizontally to a position where it is clear to move the grinding discs (12, 18) up, and then moving the grinding discs (12, 18) up to the start positions.
